# FASCICULE DE BREVET EUROPEEN

(11) **EP 1 858 756 B1**
(45) Date de publication et mention de la délivrance du brevet: **30.04.2008**
(21) Numéro de dépôt: 06708674.4
(22) Date de dépôt: 07.03.2006
(51) Int. Cl.: B64C 27/68

(54) **DISPOSITIF DE COMPENSATION DE JEU MECANIQUE DE COMMANDE DE VOL D'HELICOPTERE**
VORRICHTUNG ZUM AUSGLEICH VON MECHANISCHEM SPIEL FÜR HUBSCHRAUBERFLUGSTEUERUNG
DEVICE FOR COMPENSATING HELICOPTER FLIGHT CONTROL MECHANICAL CLEARANCE

(30) Priorité: 18.03.2005 FR 0502713
(43) Date de publication de la demande: 28.11.2007
(73) Titulaire: THALES, 92200 Neuilly sur Seine (FR)
(72) Inventeur: LE BASTARD, Jean-Claude, F-31100 Toulouse (FR)
(74) Mandataire: Esselin, Sophie
(86) Numéro de dépôt international: PCT/EP2006/060527
(87) Numéro de publication internationale: WO 2006/097418

(56) Documents cités:
- EP-A- 1 036 734
- EP-A- 1 037 130
- FR-A- 2 706 153
- FR-A- 2 771 071
- US-A- 4 426 607

## Description

La présente invention concerne les équipements de pilotage automatique pour hélicoptère.

Pour stabiliser et diriger son appareil, un pilote d'hélicoptère actionne manuellement des moyens de pilotage (manche cyclique, pas collectif et pédales) pour agir sur les axes de pilotage de l'hélicoptère (rotor principal ou rotor de queue). Un déplacement latéral ou longitudinal du manche cyclique permet d'agir respectivement sur l'axe latéral ou longitudinal de l'hélicoptère en modifiant l'incidence des pales du rotor principal. Le pas collectif permet d'adapter la puissance moteur aux conditions de vol en modifiant l'incidence des pales du rotor principal. Les pédales permettent d'orienter le nez de l'hélicoptère en modifiant l'incidence des pales du rotor de queue. Le mouvement des moyens de pilotage est transmis aux axes de pilotage au moyen de chaînes de transmissions mécaniques qui sont constituées de différents relais mécaniques. L'ensemble constitué par un moyen de pilotage et une chaîne de transmission mécanique associée constitue une commande de vol liée à l'axe de pilotage considéré. L'extrémité de la commande de vol en contact avec le moyen de pilotage associé est appelée extrémité de sortie de la commande de vol.

Comme tout système mécanique dynamique, les commandes de vol sont affectées d'un jeu mécanique qui fait que le mouvement du moyen de pilotage n'est pas retransmis intégralement aux axes de pilotage.

Les hélicoptères sont souvent équipés d'un équipement de pilotage automatique qui agit sur les commandes de vol, sous l'autorité du pilote, en vue de remplir deux missions principales : une première mission d'assistance au pilote, et une deuxième mission de pilotage automatique.

Un tel équipement de pilotage est montré par le document EP-1037130, qui répresente l'art antérieur le plus proche.

Lorsqu'il assiste le pilote dans la conduite manuelle de son hélicoptère, l'équipement de pilotage automatique permet d'une part d'amortir les évolutions de la machine pour en faciliter le contrôle par le pilote, et d'autre part de maintenir la configuration courante de vol (attitudes latérale et longitudinale, et cap) permettant ainsi au pilote de lâcher momentanément les moyens de pilotage sans se placer dans une configuration de vol qui serait dangereuse.

Lorsqu'il est en mode de pilotage automatique, l'équipement de pilotage automatique permet d'asservir un ou plusieurs paramètres de vol (altitude, vitesse verticale, vitesse longitudinale, vitesse latérale, cap, navigation....) sur une ou plusieurs valeurs de consigne choisie préalablement par le pilote.

Pour agir sur une commande de vol, l'équipement de pilotage automatique emploie des vérins, appelés « vérins série » parce qu'ils sont en série avec les commandes de vol. Les « vérins série » sont des actionneurs mécaniques qui comportent un corps et un axe de sortie, ils sont en général du type vis sans fin / écrou et ils ont une course faible et un temps de réponse court. Ils transforment une commande électrique en un mouvement de translation de leur axe de sortie par rapport à leur corps.

Les « vérins série » sont dits « mécaniquement irréversibles », c'est à dire qu'ils se déforment uniquement lorsqu'une commande électrique leur est appliquée. En particulier lorsque l'équipement de pilotage automatique est hors fonctionnement, les « vérins série » sont sans effet sur la conduite de l'hélicoptère.

Le déplacement de l'axe de sortie du « vérin série » est asservi en position à partir de l'information de position délivrée par un capteur de position qui indique la position de l'axe de sortie du « vérin série » par rapport à son corps.

Comme tout système mécanique dynamique, les « vérins série » sont affectés d'un jeu mécanique. Du fait de l'asservissement sur la position de l'axe de sortie du vérin, ce jeu vérin est compensé à chaque changement de sens par un déroulement plus important de la motorisation du vérin. Pendant le temps nécessaire au rattrapage du jeu, la position de l'axe de sortie du vérin par rapport au corps du vérin est fixe. L'axe de sortie s'asservit sur la position demandée uniquement lorsque le jeu est compensé.

Les jeux mécaniques des commandes de vols et des « vérins série », même s'ils sont réduits, augmentent la difficulté du pilotage d'un hélicoptère notamment en condition de vol turbulent.

Bien que les « vérins série » s'intègrent aux commandes de vol de l'hélicoptère et dans la mesure ou leur impact est différent, on distingue dans la suite d'une part, le jeu des « vérins série » et d'autre part le jeu des commandes de vol. Ces jeux mécaniques produisent trois effets différents :
- un retard induit par le temps nécessaire au « vérin série » pour rattraper son jeu après chaque changement de sens de déplacement. Dans la mesure où l'asservissement se fait sur la position du « vérin série », il n'y a pas de perte d'efficacité de la commande au niveau du « vérin série ».
- un retard induit par le temps nécessaire au « vérin série » pour traverser le jeu des commandes de vol après chaque changement de sens de déplacement.
- une perte d'amplitude de la commande effectivement transmise due au fait que le déplacement de la commande de vol n'est pas asservi en position. Cette perte d'amplitude correspond à une perte d'efficacité de la commande.

Ces trois effets conjugués provoquent une dégradation très nette des performances de l'équipement de pilotage automatique, en induisant par exemple une oscillation entretenue de ses assiettes. Ces effets sont perceptibles aussi bien en mode de pilotage assisté qu'en mode de pilotage automatique, car dans les deux cas, les ordres visant à agir sur les axes de pilotage de l'hélicoptère sont transmis par l'intermédiaire des commandes de vol.

Une solution pour pallier ce problème consiste à réduire les jeux en soignant la réalisation mécanique des commandes de vol d'hélicoptère. On est rapidement arrêté dans cette voie par les difficultés techniques et les coûts.

La présente invention a pour but de remédier aux inconvénients induits par la présence des jeux mécaniques des commandes de vol d'hélicoptère et des « vérins série » en introduisant une compensation de ce jeu au niveau des consignes de déplacement des « vérins série » élaborées par l'équipement de pilotage automatique.

L'invention a pour objet un dispositif de pilotage automatique (tel que defini par la revendication independante 1) pour hélicoptère agissant sur des commandes de vol de l'hélicoptère affectées de jeux mécaniques, au moyen de groupe d'actionneurs dits « vérins série » à réponse rapide, course réduite et mécaniquement irréversibles, placés en série sur les commandes de vol, caractérisé en ce qu'il comporte au moins un détecteur des sens de variation des commandes de déplacement des « vérins série » et un compensateur de jeu ajoutant aux commandes de déplacement d'un « vérin série » un terme correctif fonction du sens de variation de sa dernière commande de déplacement et du jeu mécanique affectant la commande de vol équipée du « vérin série » concerné.

Avantageusement, le détecteur du sens de variation des commandes présente un effet d'hystérésis.

Avantageusement, le dispositif de pilotage automatique engendre les commandes de déplacement de vérins à partir de consignes de position qu'il a élaborées au préalable et son compensateur de jeu ajoute un terme correctif à une commande de déplacement de vérin par l'entremise d'une modification de la consigne de position dont elle découle.

Avantageusement, lorsque l'hélicoptère est équipé de deux exemplaires d'un dispositif de pilotage automatique et de deux groupes de « vérins série », placés par couple, en série dans les commandes de vol, les exemplaires du dispositif de pilotage automatique engendrent chacun des commandes de déplacement pour l'un des vérins d'un couple de « vérins série » d'une commande de vol, chaque vérin du couple de « vérins série » effectuant la moitié du déplacement souhaité.

D'autres caractéristiques et avantages de l'invention ressortiront de la description ci-après d'un mode de réalisation donné à titre d'exemple. Cette description sera faite en regard des dessins joints dans lesquels :
- la figure 1 représente le schéma synoptique d'un équipement de pilotage d'hélicoptère pourvu d'un dispositif de pilotage automatique selon l'invention ;
- la figure 2 représente un exemple de commande de vol d'un hélicoptère commandée par un dispositif de pilotage automatique selon l'invention ;
- la figure 3a, est un diagramme de courbe représentant un exemple d'évolution temporelle de consigne de déplacement de l'axe de sortie d'un « vérin série » ;
- la figure 3b est un diagramme de courbe montrant la forme de l'évolution temporelle de la position de l'axe de sortie d'un « vérin série » affecté d'un jeu mécanique et asservi en position, en réponse à une consigne de déplacement conformément au diagramme de la figure 3a;
- la figure 4a, est un diagramme de courbe représentant un exemple d'évolution temporelle de la position de l'axe de sortie d'un « vérin série » ;
- la figure 4b est un diagramme de courbe montrant la forme de l'évolution temporelle de la position de l'extrémité de sortie d'une commande de vol affectée d'un jeu mécanique, en réponse au mouvement de l'axe de sortie d'un « vérin série » associé, qui évolue conformément au diagramme de la figure 4a ;
- la figure 4c est un diagramme de courbe montrant la forme à donner à l'évolution temporelle de la position de l'axe de sortie d'un « vérin série » pour compenser l'effet d'un jeu mécanique affectant la commande de vol associée ;
- la figure 5 représente le schéma synoptique d'un dispositif de pilotage automatique selon l'invention couplé aux actionneurs lui permettant d'agir sur une commande de vol ;
- La figure 6 représente le schéma synoptique du circuit de compensation de jeu d'un dispositif de pilotage automatique selon l'invention;
- La figure 7 représente le schéma synoptique de deux exemplaires redondants d'un dispositif de pilotage automatique fonctionnant en parallèle dans un but de sécurité et de leur couplage à des actionneurs séries disposés en série sur une commande de vol.

Pour faciliter la lecture de la description, les mêmes repères désigneront les mêmes éléments dans les différentes figures.

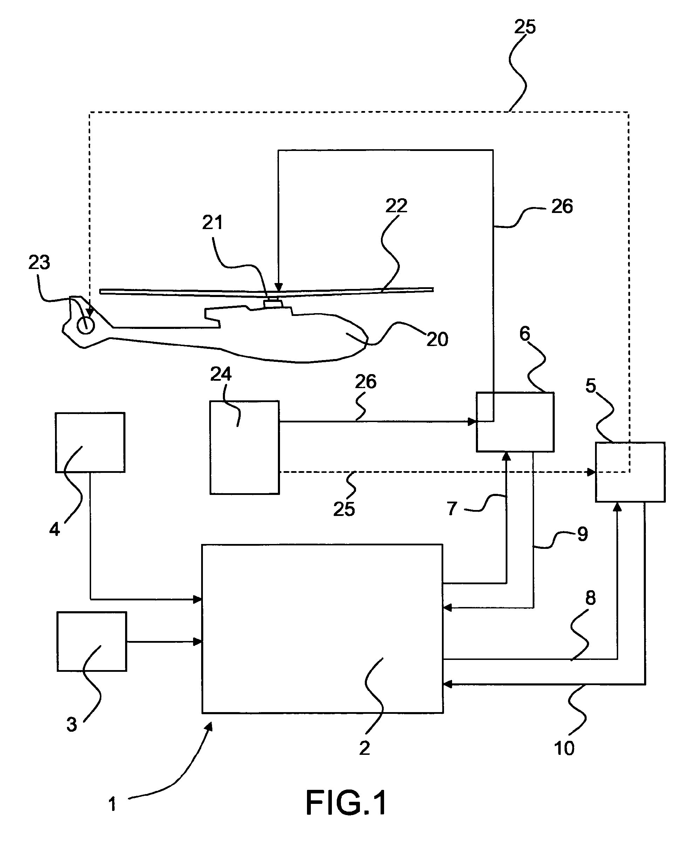

Pour des raisons de clarté du dessin, l'équipement de pilotage automatique 1 d'un l'hélicoptère 20 est représenté schématiquement sur la figure 1 à l'extérieur de l'hélicoptère 20 bien qu'il soit embarqué à son bord.

L'hélicoptère 20 comporte un rotor principal 21 pour assurer la sustentation, l'avance le contrôle des assiettes latérales et longitudinales, un rotor de queue 23 pour contrôler le lacet, des moyens manuels de pilotage (manche, pas collectif, pédalier) 24 reliés par des commandes de vol (chaînes de transmission mécanique) 25, 26 aux éléments de contrôle de l'incidence des pales des rotors 21, 23 de l'hélicoptère.

L'équipement de pilotage automatique 1 comporte principalement :
- des moyens manuels de pilotage 24 (manche cyclique, pas collectif et pédales ou autres) permettant au pilote d'agir sur les commandes de vol 25, 26 ;
- un dispositif de pilotage automatique 2 ;
- un ensemble de capteurs 3, délivrant, à partir de mesures, les valeurs effectives de paramètres de vol, tels que les vitesses angulaires, les assiettes, le cap, les accélérations ;
- des moyens de réglage 4 permettant au pilote de l'hélicoptère 20 de fixer, au dispositif de pilotage automatique 2, des valeurs de consigne de paramètres de vol tels que l'altitude, la hauteur, la vitesse verticale, l'assiette, l'accélération de l'hélicoptère 20 ;
- des ensembles de « vérins série » 5, 6 intercalés en série dans les commandes de vol 25, 26 et commandés par le dispositif de pilotage automatique 2. Les « vérins série » 5, 6 transmettent leur position courante au dispositif de pilotage automatique 2, via les liaisons 9 10 ;

Le dispositif de pilotage automatique 2 calcule en fonction des données capteur 3 les consignes de position des « vérins série » 5, 6 et assure l'asservissement en position de ces « vérins série » en délivrant les commandes de déplacement, par l'intermédiaire des liaison 7, 8.

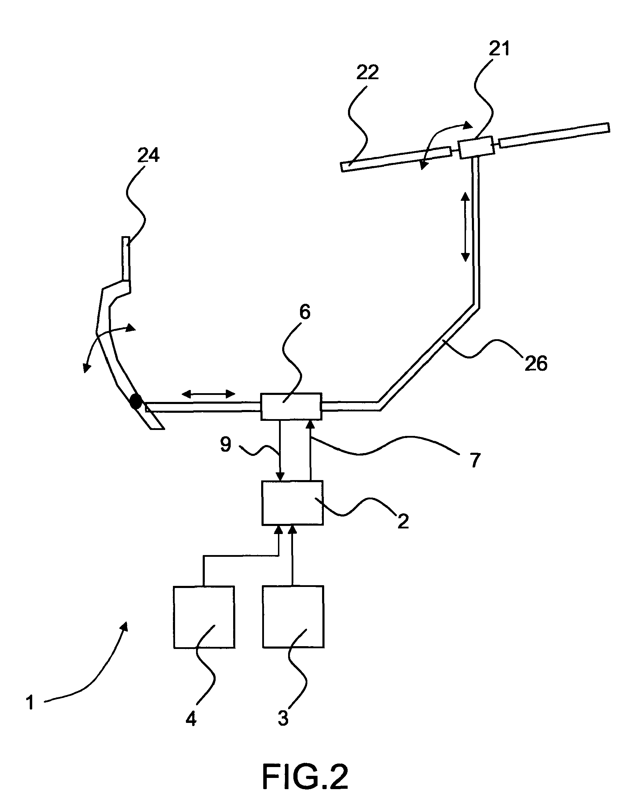

La figure 2 situe les « vérins série » 6 par rapport aux moyens manuels de pilotage 24 et aux commandes de vol 26 agissant sur le rotor 21.

Les « vérins série » 6, placés en série avec les commandes de vol 26, permettent de positionner les commandes de vol 26 en fonction de la position calculée par le dispositif de pilotage automatique 2.

On propose de mettre à contribution les « vérins série » 6 pour compenser les effets d'un jeu mécanique de la commande de vol 26 aussi bien en mode de pilotage « manuel » qu'en mode de pilotage automatique. On verra que les effets des jeux mécaniques des « vérins série » 6 se trouveront également réduit par cette compensation.

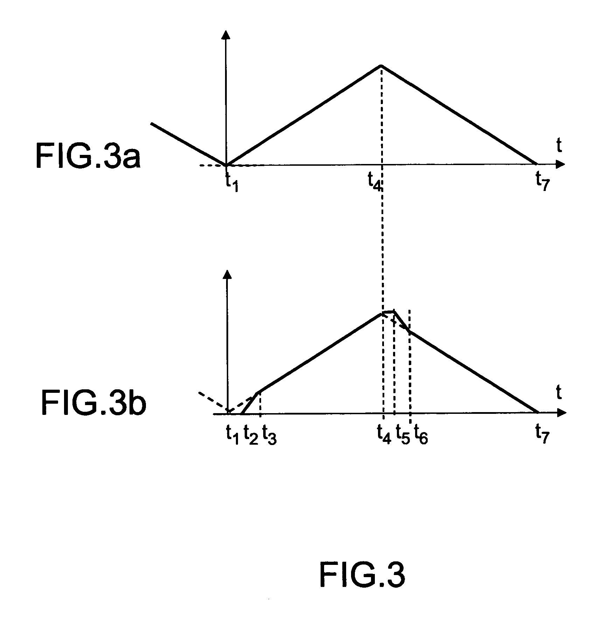

La figure 3a est un diagramme montrant un exemple de forme d'évolution dans le temps d'une commande de déplacement pouvant être imprimée à un « vérin série » par un dispositif de pilotage automatique.

Dans la suite, on considère un « vérin série » qui se dilate lorsqu'on lui applique une commande de déplacement dans un sens dit "croissant" et qui se contracte lorsqu'on lui applique une commande de déplacement dans l'autre sens dit "décroissant".

Dans des conditions idéales, c'est-à-dire en l'absence de jeu mécanique, la position de l'extrémité de l'axe de sortie du « vérin série » suit exactement la commande de déplacement et se déplace longitudinalement en extension ou en rétraction sous l'action d'une commande.

Le jeu d'un « vérin série » est quantifié par la valeur Δjᵥ. Du fait de l'asservissement en position de l'axe de sortie du vérin, le jeu induit, à chaque changement de sens, une absence temporaire de mouvement de l'axe de sortie du vérin (si on se réfère au graphe 3a, entre les dates t₁ et t₂ ou entre les dates t₄ et t₅). La durée nécessaire au rattrapage du jeu est donc liée à la valeur Δjᵥ du jeu vérin et à la vitesse de déroulement de la motorisation du vérin par la relation suivante : Δjᵥ = (t_{2 -} t₁) * vitesse vérin

Lorsque le dispositif de pilotage automatique commande le mouvement de l'axe de sortie d'un « vérin série » en employant un asservissement en position, la commande de déplacement du « vérin série » est élaborée à partir d'une consigne de position.

La figure 3b représente, en traits pointillés, l'évolution temporelle de la position de l'extrémité de l'axe de sortie d'un « vérin série » sans jeu mécanique, dont le mouvement est commandé au moyen d'un asservissement en position, la consigne de position évoluant dans le temps selon le diagramme de la figure 3a.

La figure 3b représente, en trait plein, l'évolution temporelle de la position de l'extrémité de l'axe de sortie d'un « vérin série » affecté d'un jeu mécanique, dont le mouvement est commandé au moyen d'un asservissement en position, la consigne de position évoluant dans le temps selon le diagramme de la figure 3a.

Dans les instants qui suivent un changement du sens de variation de la consigne de position (de t₁ à t₂ et de t₄ à t₅), le moteur du « vérin série » tourne à une vitesse d'autant plus grande que l'écart entre la consigne et la position de son axe de sortie du « vérin série » est grand: Tant que le jeu mécanique jᵥ du « vérin série » n'est pas compensé, l'extrémité de son axe de sortie reste immobile.

A partir du moment ou ce jeu est compensé (à t₂ et à t₅), l'extrémité de l'axe de sortie du « vérin série » entre en mouvement et sa position rallie celle imposée par la consigne. Ce ralliement s'opère à une vitesse d'autant plus grande que l'écart entre la consigne et la position de l'axe de sortie du « vérin série » est grand. A partir du moment où le ralliement est réalisé (à partir de t₃ et de t₆) la position de l'extrémité de l'axe de sortie s'asservit sur la position de consigne.

Une commande de vol a pour fonction de transmettre un ordre de déplacement au moyens de pilotage de l'hélicoptère associé. L'extrémité de sortie de la commande de vol se déplace en fonction des consignes de déplacement élaboré par le pilote ou le dispositif de pilotage automatique et prend dans ce dernier cas la forme d'un déplacement de l'axe de sortie du « vérin série » qui lui est associé.

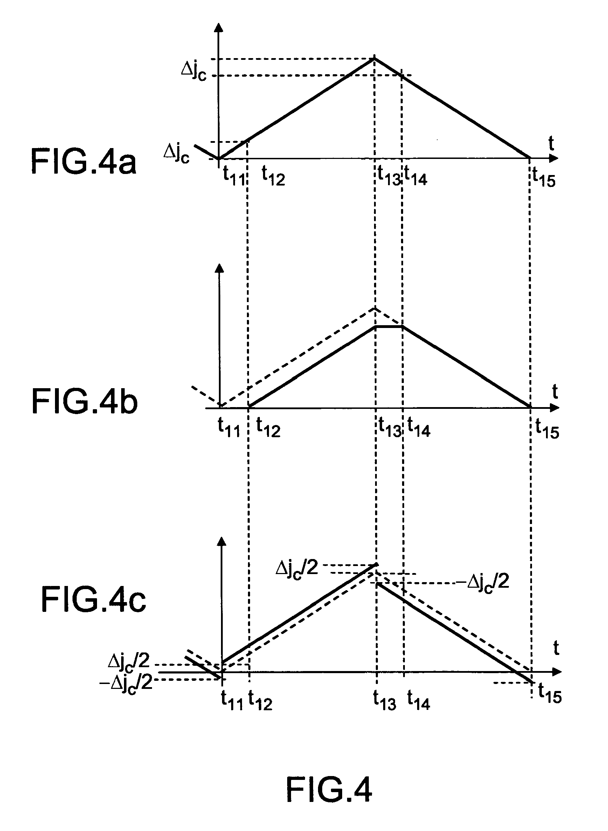

La figure 4a est un diagramme montrant un exemple de forme d'évolution dans le temps de la position de l'axe de sortie d'un « vérin série » pouvant être commandée par un dispositif de pilotage automatique.

La figure 4b représente, en trait pointillés, le déplacement de la position de l'extrémité de sortie d'une commande de vol affectée d'aucun jeu mécanique en réponse à une commande de déplacement imprimée par la position de l'axe de sortie du « vérin série » évoluant dans le temps selon le diagramme de la figure 4a.

La figure 4b représente, en trait plein, le déplacement de la position de l'extrémité de sortie d'une commande de vol affectée d'un jeu mécanique en réponse à une commande de déplacement imprimée par la position de l'axe de sortie du « vérin série » évoluant dans le temps selon le diagramme de la figure 4a. Dans les instants qui suivent un changement du sens de variation de la consigne de déplacement (de t₁₁ à t₁₂ et de t₁₃ à t₁₄), l'extrémité de la commande de vol affectée d'un jeu mécanique reste immobile. Par la suite (de t₂ à t₃) sa position suit une évolution proportionnelle à celle de la consigne de position mais avec un certain retard.

Le jeu mécanique de la commande de vol est quantifié par la valeur Δj_{c} qui correspond à l'écart de position à donner à l'extrémité de l'axe de sortie d'un « vérin série » qui lui est associé, après une inversion de son sens de déplacement, pour que l'extrémité de sortie de la commande de vol se remette en mouvement. C'est à dire, si on se réfère au graphe 4a, à l'écart de position de l'extrémité de l'axe de sortie du « vérin série » entre les dates t₁ et t₂ ou entre les dates t₃ et t₄.

La figure 4c montre la forme de l'évolution temporelle du mouvement de l'axe de sortie d'un « vérin série » pour que l'évolution temporelle de l'extrémité de sortie de la commande de vol corresponde à celle qui est montrée en traits pointillés sur la figure 4b.

Plus généralement, pour compenser les effets du jeu d'une commande de vol, on corrige la position de l'axe de sortie du « vérin série » par rapport à celle qu'il faudrait lui donner s'il était associé à une commande de vol sans jeu mécanique. Quand la consigne de position de l'axe de sortie du « vérin série » a une pente positive, la correction consiste à un ajout de la moitié de Δj_{c} à la consigne de position. Quand la variation de la consigne de position de l'axe de sortie du « vérin série » s'inverse, la correction consiste en la soustraction de la moitié de Δj_{c} à la consigne de position. Ainsi compensée, la consigne de position réalise un écart d'amplitude total de Δj_{c} , à chaque changement de sens de variation de la consigne de déplacement de l'axe de sortie du « vérin série » et la commande de vol est immédiatement en mouvement.

Cette manière de compenser le jeu mécanique d'une commande de vol au niveau de la consigne de position du « vérin série » se traduit par une augmentation de l'amplitude de la consigne de déplacement appliquée au « vérin série ». Cette augmentation, qui suit le changement de sens de la consigne, à pour effet d'augmenter l'erreur instantanée d'asservissement. Dans la mesure où la vitesse du moteur du « vérin série » est directement liée à cette erreur, cela a pour effet d'augmenter la vitesse du moteur. La compensation des effets du jeu de la commande de vol a pour résultat d'accélérer la réduction des effets du jeu du « vérin série ».

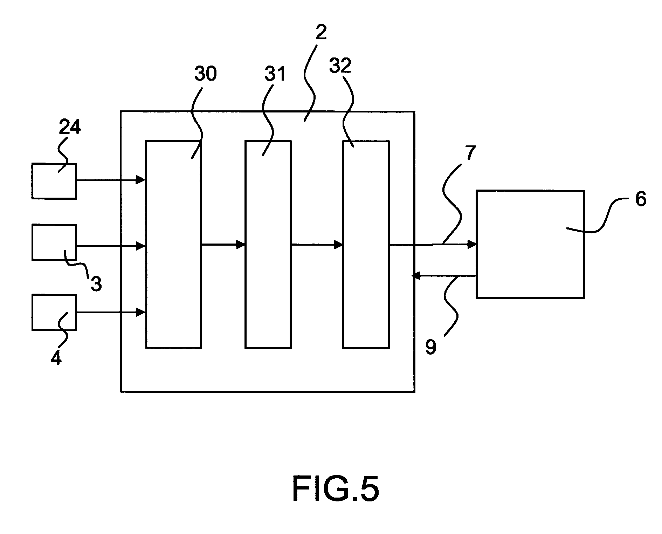

Comme montré à la figure 5, le dispositif de pilotage automatique 2 peut être organisé en trois étages :
- un premier étage 30 élabore les consignes de position des « vérins série » 6 en appliquant les lois connues de pilotage d'hélicoptère aux paramètres effectifs de vol de l'hélicoptère délivrés par l'ensemble de capteurs 3 de l'équipement de pilotage de l'hélicoptère et en tenant compte des positions effectives des « vérins série » 6, des efforts exercés par le pilote sur les moyens manuels de pilotage 24, du mode de pilotage désiré introduit par le pilote par l'intermédiaire des moyens de réglage 4. Cet étage module le puissance électrique délivré au « vérin série » 6 en fonction de l'erreur d'asservissement.

Le troisième étage 32 reçoit des consignes de position pour des « vérins série » 6 et les transforme en commandes de déplacement tenant compte des positions effectives des « vérins série » délivrées par leurs capteurs de position.

Le deuxième étage 31 ajoute, si nécessaire, des compensations aux consignes de position des « vérins série » pour compenser les jeux mécaniques.

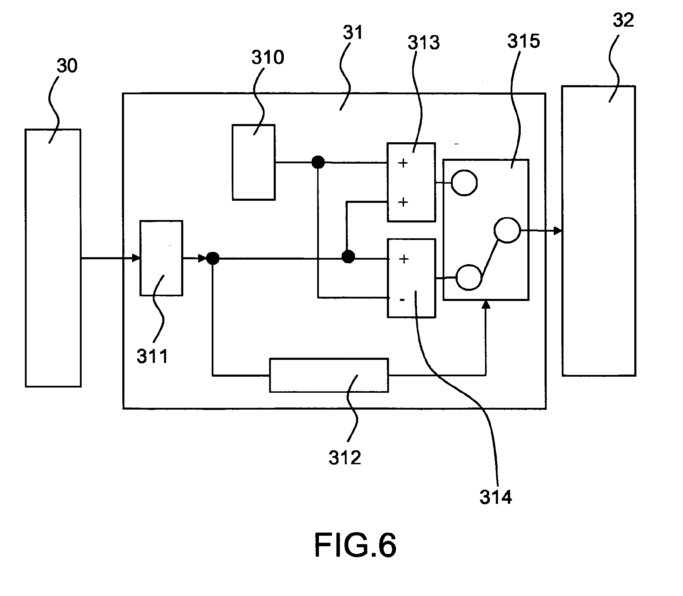

La figure 6 montre un exemple de réalisation possible de ce deuxième étage 31. Dans cet exemple de réalisation, le deuxième étage 31 comporte :
- un registre 310 mémorisant des valeurs correctives arbitraire correspondant à la moitié des valeurs moyennes des jeux mécaniques des commandes de vol estimées à partir de mesures effectuées sur un ou plusieurs hélicoptères du même type que l'hélicoptère concerné ;
- un filtre antibruit 311 traitant les variations des consignes de position élaborées par le premier étage 30 du dispositif de pilotage automatique 2, notamment pour éliminer les raies de bruit aux fréquences de rotation des rotors de l'hélicoptère ;
- un additionneur 313 ajoutant à la valeur d'une consigne de position issue du filtre antibruit 311 et destinée à un « vérin série », la valeur corrective mémorisée dans le registre 310 et correspondant à la valeur moyenne du jeu mécanique de la commande de vol sur laquelle est monté le « vérin série » concerné ;
- un soustracteur 314 retranchant à la valeur d'une consigne de position issue du filtre antibruit 311 et destinée à un « vérin série », la valeur corrective mémorisée dans le registre 310 et correspondant à la valeur moyenne du jeu mécanique de la commande de vol sur laquelle est monté le « vérin série » concerné ;
- un circuit de détection 312, avec effet d'hystérésis, du sens de variation des consignes de position issues du filtre antibruit 311 et destinées à un même « vérin série ». Le circuit évalue la valeur absolue de l'écart entre deux consignes successives de position. Lorsque cette valeur est inférieure à un seuil fixé a priori, le sens de variation est considéré comme inchangé, en cas contraire le sens de variation est considéré comme étant égal au signe de l'écart mesuré ;
- un multiplexeur 315 adressé par le circuit de détection de sens de variation 312, délivre en sortie du dispositif de pilotage automatique 2 les consignes compensées de positions destinées aux « vérins séries » 6 en provenance de l'additionneur 313 ou du soustracteur 314 en fonction du sens de déplacement du « vérin série » concerné. La valeur considérée est celle issue de 313 si le signe de variation de la commande de déplacement filtrée 51 détecté par le dispositif 315 est positif ou la valeur issue de 314 si le signe de variation de la commande de déplacement filtrée 51 détecté par le dispositif 315 est négatif.

Pour des raisons de sécurité, l'équipement de pilotage automatique 2 est souvent doublé, chaque exemplaire étant pourvu de circuits d'autotest. Les deux exemplaires redondants d'équipement de pilotage automatique fonctionnent alors en parallèle en s'informant mutuellement de leurs états de fonctionnement.

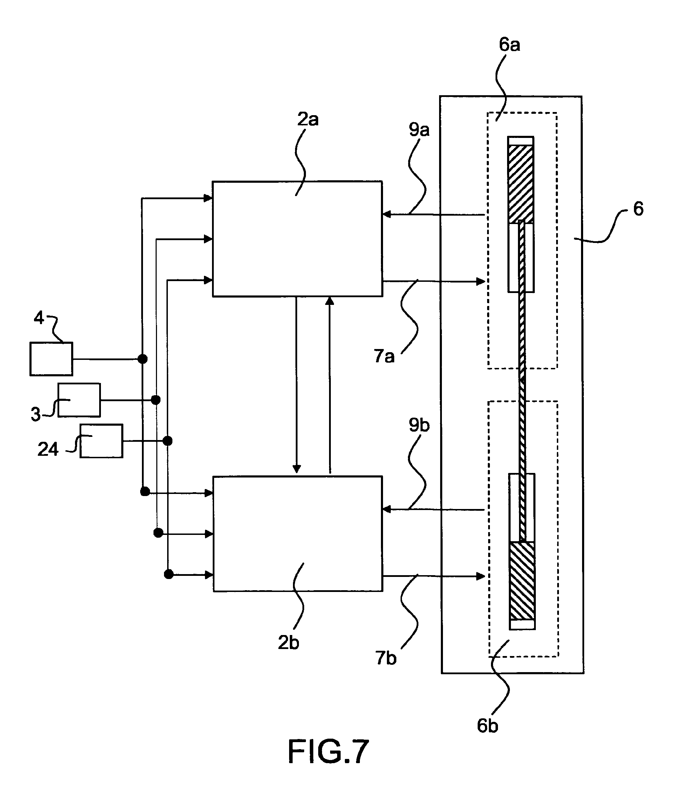

Comme représenté à la figure 7, en présence de deux exemplaires redondants 2a, 2b de dispositif de pilotage automatique, les « vérins série » sont également doublés au niveau des commandes de vol. Chacun des deux exemplaires redondants 2a, 2b de dispositif de pilotage automatique contrôle un exemplaire 6a, 6b du couple de « vérins série » d'une commande de vol auquel il commande la moitié du déplacement qu'il demanderait en présence d'un seul « vérin série », le déplacement total étant partagé à égalité entre les deux exemplaires de « vérin série ».

En cas de problème de fonctionnement détecté par les circuits d'autotest de l'un des exemplaires de dispositif de pilotage automatique 2a ou 2b ou au niveau de l'exemplaire de « vérin série » qu'il contrôle, l'autre exemplaire de dispositif de pilotage automatique 2b ou 2a en est informé et transfert la commande de la totalité du déplacement sur l'exemplaire de « vérin série » qu'il contrôle.

## Revendications

1. Dispositif de pilotage automatique (2) pour hélicoptère, agissant sur des commandes de vol (25, 26) de l'hélicoptère affectées de jeux mécaniques au moyen d'un groupe de vérins dits « vérins série » (5, 6) à réponse rapide, faible course et mécaniquement irréversibles, placé en série sur les commandes de vol (25, 26), **caractérisé en ce qu'**il comporte au moins un détecteur (312) de sens de variation de la consigne de déplacement des « vérins série » et un compensateur de jeu (315) ajoutant à la consigne, en fonction du sens de variation de cette dernière, un terme correctif fonction du jeu mécanique (311) affectant la commande de vol (25, 26) équipée du « vérin série » (5, 6) concerné.

2. Dispositif selon la revendication 1, **caractérisé en ce que** le terme correctif ajouté par le compensateur de jeu (315) prend en compte pour la valeur du jeu (310) affectant une commande de vol (25, 26) une valeur estimée à partir de mesures effectuées sur un ou plusieurs hélicoptères destinés à recevoir le dispositif de pilotage automatique (2).

3. Dispositif selon l'une des revendications 1 ou 2, **caractérisé en ce que** le détecteur (312) du sens de variation des commandes présente un effet d'hystérésis.

4. Dispositif selon l'une des revendications 1 à 3, **caractérisé en ce que** le dispositif de pilotage automatique (2) engendre les commandes de déplacement de vérins à partir de consignes de position qu'il a élaborées au préalable et **en ce que** son compensateur de jeu ajoute un terme correctif à une commande de déplacement de vérin par l'entremise d'une modification de la consigne de position dont elle découle.

5. Hélicoptère équipé de deux exemplaires d'un dispositif de pilotage automatique (2a, 2b) selon l'une des revendications 1 à 4, et de deux groupes de « vérins série » (6a, 6b) placés par couple, en série dans les commandes de vol (26), les exemplaires du dispositif de pilotage automatique (2a, 2b) engendrant chacun des commandes de déplacement (7a, 7b) pour l'un des vérins d'un couple de « vérins série » d'une commande de vol, chaque vérin (6a, 6b) du couple de « vérins série » effectuant la moitié du déplacement souhaité.

6. Hélicoptère selon la revendication 5, **caractérisé en ce que** chaque exemplaire de dispositif de pilotage automatique (2a, 2b) comporte un dispositif de surveillance de son état de fonctionnement et/ou des « vérins série » qu'il commande individuellement.

## Claims

1. Automatic piloting device (2) for helicopter, acting on flight controls (25, 26) of the helicopter that are affected by mechanical play by means of a group of mechanically irreversible rams termed "series rams" (5, 6) with fast response and short stroke, placed in series on the flight controls (25, 26), **characterized in that** it comprises at least one direction detector (312) for detecting the direction of variation of the displacement instruction of the "series rams" and a play compensator (315) adding to the instruction, as a function of the latter's direction of variation, a corrective term dependent on the mechanical play (311) affecting the flight control (25, 26) equipped with the "series ram" (5, 6) concerned.

2. Device according to Claim 1, **characterized in that** the corrective term added by the play compensator (315) takes into account for the value of the play (310) assigning a flight control (25, 26) a value estimated on the basis of measurements performed on one or more helicopters intended to receive the automatic piloting device (2).

3. Device according to either of Claims 1 and 2, **characterized in that** the detector (312) for detecting the direction of variation of the controls exhibits a hysteresis effect.

4. Device according to one of Claims 1 to 3, **characterized in that** the automatic piloting device (2) generates the ram displacement controls on the basis of position instructions that it has formulated beforehand and **in that** its play compensator adds a corrective term to a ram displacement control through a modification of the position instruction from which it stems.

5. Helicopter equipped with two copies of an automatic piloting device (2a, 2b) according to one of Claims 1 to 4, and of two groups of "series rams" (6a, 6b) placed pairwise, in series in the flight controls (26), the copies of the automatic piloting device (2a, 2b) generating each of the displacement controls (7a, 7b) for one of the rams of a pair of "series rams" of a flight control, each ram (6a, 6b) of the pair of "series rams" performing half of the desired displacement.

6. Helicopter according to claim 5, **characterized in that** each copy of automatic piloting device (2a, 2b) comprises a device for controlling its operating state and/or the "series rams" that it individually controls.

## Patentansprüche

1. Autopilotvorrichtung (2) für einen Hubschrauber, die auf Flugsteuerungen (25, 26) des Hubschraubers, auf die sich ein mechanisches Spiel auswirkt, mittels einer Gruppe von "serielle Arbeitszylinder" genannten Arbeitszylindern (5, 6) mit schneller Reaktion, geringem Hub und mechanisch unumkehrbar, einwirkt, die in Reihe auf den Flugsteuerungen (25, 26) angeordnet ist, **dadurch gekennzeichnet, dass** sie mindestens einen Detektor (312) der Änderungsrichtung des Bewegungs-Einstellwerts der "seriellen Arbeitszylinder" und ein Spielausgleichselement (315) aufweist, das dem Einstellwert in Abhängigkeit von dessen Änderungsrichtung einen Korrekturterm hinzufügt, der von dem mechanischen Spiel (311) abhängt, das sich auf die Flugsteuerung (25, 26) auswirkt, die mit dem betroffenen "seriellen Arbeitszylinder" (5, 6) ausgestattet ist.

2. Vorrichtung nach Anspruch 1, **dadurch gekennzeichnet, dass** der vom Spielausgleichselement (315) hinzugefügte Korrekturterm für den Wert des Spiels (310), das sich auf eine Flugsteuerung (25, 26) auswirkt, einen Wert berücksichtigt, der ausgehend von Messungen geschätzt wird, die an einem oder mehreren Hubschraubern durchgeführt werden, die dazu bestimmt sind, die Autopilotvorrichtung (2) zu erhalten.

3. Vorrichtung nach einem der Ansprüche 1 oder 2, **dadurch gekennzeichnet, dass** der Detektor (312) der Änderungsrichtung der Steuerungen eine Hysteresewirkung hat.

4. Vorrichtung nach einem der Ansprüche 1 bis 3, **dadurch gekennzeichnet, dass** die Autopilotvorrichtung (2) die Bewegungssteuerungen von Arbeitszylindern ausgehend von Positionssollwerten erzeugt, die sie vorher erarbeitet hat, und dass ihr Spielausgleichselement einer Arbeitszylinder-Bewegungssteuerung einen Korrekturterm mittels einer Veränderung des Positionssollwerts hinzufügt, von dem sie stammt.

5. Hubschrauber, der mit zwei Exemplaren einer Autopilotvorrichtung (2a, 2b) nach einem der Ansprüche 1 bis 4 und mit zwei Gruppen von "seriellen Arbeitszylindern" (6a, 6b) ausgestattet ist, die paarweise in Reihe in den Flugsteuerungen (26) angeordnet sind, wobei die Exemplare der Autopilotvorrichtung (2a, 2b) je Bewegungssteuerungen (7a, 7b) für einen der Arbeitszylinder eines Paars von "seriellen Arbeitszylindern" einer Flugsteuerung erzeugen, wobei jeder Arbeitszylinder (6a, 6b) des Paars von "seriellen Arbeitszylindern" die Hälfte der gewünschten Bewegung ausführt.

6. Hubschrauber nach Anspruch 5, **dadurch gekennzeichnet, dass** jedes Exemplar einer Autopilotvorrichtung (2a, 2b) eine Vorrichtung zur Überwachung seines Betriebszustands und/oder "serielle Arbeitszylinder" aufweist, die es einzeln steuert.
